# EUROPÄISCHE PATENTANMELDUNG

(11) **EP 4 516 591 A1**
(43) Veröffentlichungstag der Anmeldung: **05.03.2025**
(21) Anmeldenummer: 24190194.1
(22) Anmeldetag: 23.07.2024
(51) Int. Cl.: B60R 7/10, B60R 11/00

(54) **ELEMENT ZUR HALTERUNG VON GEGENSTÄNDEN IM INNEREN EINER KABINE EINER LANDWIRTSCHAFTLICHEN ARBEITSMASCHINE**

(30) Priorität: 04.09.2023 DE 102023123713
(71) Anmelder: CLAAS Tractor S.A.S., 78141 Vélizy-Villacoublay Cedex (FR)
(72) Erfinder: Auffret, Pierre, 75014 Paris (FR); Serafim, Claude, 92300 Levallois (FR); Rodrigues, Bruno, 92300 Levallois (FR); Nachin, Pierre, 35890 Laille (FR); Le Pottier, Yan, 78125 Hermeray (FR)
(74) Vertreter: CLAAS 365FarmNet GmbH

(57) **Zusammenfassung**

Die vorliegende Erfindung betrifft Element (16) zur Halterung von Gegenständen im Inneren einer Kabine (3) einer landwirtschaftlichen Arbeitsmaschine (1), insbesondere eines Traktors (2). Das Element (16) umfasst einen Halterungsabschnitt (17) zur Halterung von Gegenständen und einen an den Halterungsabschnitt (17) angrenzenden Befestigungsabschnitt (18) zum Befestigen des Elements (16) an einem Strukturelement (15) der Kabine (3). Das Element (16) ist dadurch gekennzeichnet, dass der Befestigungsabschnitt (18) dazu vorgesehen und eigerichtet ist, im befestigten Zustand des Elements (16) in eine zum Befestigungsabschnitt (18) komplementär ausgeführte Durchdringung (19) in dem Strukturelement (15) einzugreifen, wobei der Befestigungsabschnitt (18) eine Arretierstruktur (20) umfasst, mittels welcher das Element (16) lösbar an dem Strukturelement (15) befestigbar ist, wobei die Arretierstruktur (20) derart an dem Befestigungsabschnitt (18) angeordnet ist, dass sie das Strukturelement (15) im befestigten Zustand des Elements (16) hintergreift.

## Beschreibung

Die vorliegende Erfindung betrifft ein Element zur Halterung von Gegenständen im Inneren einer Kabine einer landwirtschaftlichen Arbeitsmaschine, insbesondere eines Traktors, gemäß dem Oberbegriff des unabhängigen Patentanspruchs 1, eine Kabine für eine landwirtschaftliche Arbeitsmaschine, insbesondere einen Traktor, mit zumindest einem Element zur Halterung von Gegenständen im Inneren der Kabine gemäß dem Oberbegriff des unabhängigen Patentanspruchs 13 sowie eine landwirtschaftliche Arbeitsmaschine, insbesondere einen Traktor, mit einer Kabine gemäß dem Oberbegriff des unabhängigen Patentanspruchs 14.

Kabinen für landwirtschaftliche Arbeitsmaschinen, wie beispielsweise Traktoren, stellen einen vollwertigen Arbeitsplatz dar, der von einem Bediener oftmals während eines gesamten Arbeitstages genutzt wird. Je nachdem welche Arbeitsaufgabe mittels der landwirtschaftlichen Arbeitsmaschine durchgeführt werden soll, deren Dauer und den vorherrschenden Witterungsbedingungen stattet der Bediener die Kabine vor Aufnahme der Arbeitsaufgabe unterschiedlich aus. Gewisse Arbeitsaufgaben erfordern unter Umständen die Verwendung von Assistenzsystemen. Gewisse Assistenzsysteme sind dabei auf einem Steuergerät der landwirtschaftlichen Arbeitsmaschine vorhanden und können über ein im Inneren der Kabine vorhandenes Terminal/Display bedient und dargestellt werden. Andere Assistenzsysteme werden allerdings nicht vom Hersteller der landwirtschaftlichen Arbeitsmaschine selbst angeboten und müssen demnach von anderen Dienstleistern bezogen werden. Damit solche Assistenzsysteme bei der Durchführung einer Arbeitsaufgabe genutzt werden können, ist es oftmals erforderlich zusätzliche Displays/Terminals im Inneren der Kabine zu montieren bzw. zu befestigen und diese über Kabel, Leitungen oder dergleichen mit erforderlichen Daten zu versorgen und/oder in das Netzwerk der landwirtschaftlichen Arbeitsmaschine zu integrieren.

Neben solchen Gegenständen, wie Display/Terminals und hierfür erforderliche Kabel, Leitungen oder dergleichen, werden von dem Bediener der landwirtschaftlichen Arbeitsmaschine oftmals noch weitere Gegenstände mit in die Kabine genommen. Beginnt der Bediener die Arbeit beispielsweise in den frühen Morgenstunden so betritt er die Kabine abhängig von den vorherrschenden Witterungsbedingungen üblicherweise zunächst mit einer Jacke, da die Kabine noch nicht aufgeheizt ist. Sobald die Kabine jedoch über ein vorhandenes HVAC-System aufgeheizt ist, legt der Bediener seine Jacke in der Regel ab. Oftmals trägt ein Bediener auch eine Kopfbedeckung, um sich vor Sonneneinstrahlung und/oder einer Sichtbeeinträchtigung aufgrund von Sonneneinstrahlung in die Kabine zu schützen. Sofern sich der Witterungszustand ändert, besteht gegebenenfalls ein Bedarf, die Kopfabdeckung abzunehmen und im Inneren der Kabine zu verstauen.

Weiterhin nimmt der Bediener auch Lebensmittel und/oder Getränke mit in die Kabine, da die Arbeitsmaschine während der nur kurzen Erntesaison voll ausgelastet werden sollte, die Arbeitstage daher oftmals, wie eingangs beschrieben, lang und ohne längere Pausen sind.

Grundsätzlich besteht dabei ein Bedarf die besagten Gegenstände zuverlässig im Inneren der Kabine positionieren bzw. verstauen zu können. Oftmals sind jedoch im Inneren der Kabine keine Staufächer und/oder Vorrichtungen zur Anbringung bzw. Halterung von Kabeln, Leitungen oder dergleichen sowie Kleidungsstücken in ausreichender Anzahl und/oder an verschiedenen Stellen im Inneren der Kabine vorhanden. Kleidungsstücke und/oder Lebensmittel sowie Getränke werden demnach oftmals einfach in die Kabine gelegt, wobei sie sich dann im Betrieb der landwirtschaftlichen Arbeitsmaschine unkontrolliert im Inneren der Kabine bewegen können. Kabel, Leitungen oder dergleichen hängen von den Displays/Terminals herab und beeinträchtigen den Bediener im Betrieb der landwirtschaftlichen Arbeitsmaschine.

Aus der WO 2023/043752 A1 ist in diesem Zusammenhang beispielsweise ein austauschbares Haltersystem für eine Kabine einer landwirtschaftlichen Arbeitsmaschine bekannt. Das Haltersystem umfasst eine Halterung an einem Verkleidungselement im Inneren der Kabine, wobei die Halterung eine an einem hinteren Abschnitt ausgebildeten Rampe und einem unteren Abschnitt umfasst. Das Haltersystem umfasst ferner einen abnehmbaren Halter mit einer Rückplatte mit einem vorderen Teil und einem hinteren Teil, einer Seitenwand, wobei die Seitenwand und der vordere Teil der Rückplatte zusammen eine Aufnahme bilden. Der abnehmbare Halter umfasst weiter einen Vorsprung, der sich von dem hinteren Teil der Rückplatte nach außen erstreckt, und einem Ausleger, der sich von dem hinteren Teil der Rückplatte erstreckt, wobei der Ausleger einen Sicherungsvorsprung aufweist, wobei der Sicherungsvorsprung an einem distalen Teil des Auslegers angeordnet ist. Wenn der abnehmbare Halter in der Fahrerkabine der Arbeitsmaschine montiert ist, kann der Vorsprung des abnehmbaren Halters in die Rampe der Halterung eingreifen, und der Sicherungsvorsprung des Auslegers kann in den unteren Abschnitt der Halterung eingreifen.

Ein solches Haltersystem einer Kabine einer landwirtschaftlichen Arbeitsmaschine erlaubt demnach grundsätzlich das Verstauen von Gegenständen, wie beispielsweise Lebensmitteln, Getränken und/oder Kleidungsstücken. Nachteilig ist allerdings, dass dieses in aller Regel nur an einer Stelle in der Kabine montiert bzw. befestigt werden kann. Sofern der Halter von der Halterung abgenommen ist, beispielsweise, weil dieser in der Kabine nicht benötigt wird, ist das Erscheinungsbild im Inneren der Kabine aufgrund der komplexen Ausgestaltung erheblich beeinträchtigt. Im Übrigen ist eine Befestigung von kleineren Gegenständen und/oder Kabeln, Leitungen oder dergleichen, beispielsweise zwecks einer Führung solcher Kabel, Leitungen oder dergleichen im Inneren der Kabine, mittels eines solchen Systems überhaupt nicht möglich, da lediglich eine groß dimensionierte Aufnahme bereitgestellt wird, in der Gegenstände abgelegt bzw. platziert werden können. Weiterhin ist die Herstellung eines solchen Haltersystems sehr aufwendig und erfordert eine spezielle geometrische Ausgestaltung der Verkleidungselemente, was zu erheblichen Herstellungskosten führt.

Ausgehend hiervon ist es demnach die Aufgabe der vorliegenden Erfindung die beschriebenen Nachteile des Standes der Technik auszuräumen und insbesondere ein Element zur Halterung von Gegenständen anzugeben, welches unkompliziert im Inneren der Kabine zu befestigen und auch wieder zu lösen ist und gleichzeitig die Halterung von verschiedensten Gegenständen im Inneren der Kabine ermöglicht, und zwar derart, dass der Bediener möglichst wenig, vorzugsweise keinerlei, Beeinträchtigungen hinsichtlich Komfort, Sicht und/oder Zugänglichkeit während des Betriebs eine landwirtschaftlichen Arbeitsmaschine erfährt.

Diese Aufgabe wird erfindungsgemäß durch die Merkmale des unabhängigen Patentanspruchs 1 gelöst, wobei vorteilhafte Weiterbildungen des erfindungsgemäßen Elements Gegenstand der entsprechenden abhängigen Patentansprüche 2 bis 12 sind.

Demnach betrifft die vorliegende Erfindung ein Element zur Halterung von Gegenständen im Inneren einer Kabine einer landwirtschaftlichen Arbeitsmaschine, insbesondere eines Traktors. Das Element umfasst einen Halterungsabschnitt zur Halterung von Gegenständen und einen an den Halterungsabschnitt angrenzenden Befestigungsabschnitt zum Befestigen des Elements an einem Strukturelement, vorzugsweise einem Verkleidungselement, der Kabine. Das Element ist dadurch gekennzeichnet, dass der Befestigungsabschnitt dazu vorgesehen und eigerichtet ist, im befestigten Zustand des Elements in eine zum Befestigungsabschnitt komplementär ausgeführte Durchdringung in dem Strukturelement einzugreifen, wobei der Befestigungsabschnitt eine Arretierstruktur umfasst, mittels welcher das Element lösbar an dem Strukturelement befestigbar ist, wobei die Arretierstruktur derart an dem Befestigungsabschnitt angeordnet ist, dass sie das Strukturelement im befestigten Zustand des Elements hintergreift.

Die erfindungsgemäße Ausgestaltung schafft auf besonders unkomplizierte Art und Weise eine Möglichkeit verschiedenste Gegenstände im Inneren der Kabine zu halten bzw. zu befestigen. Die erfindungsgemäße Ausgestaltung des Elements in Form eines Halterungsabschnitt und eines daran angrenzenden Befestigungsabschnitts mit einer Arretierstruktur sowie das Zusammenwirken mit der komplementären Durchdringung, die in einem oder mehreren Strukturelementen der Kabine ausgebildet ist, sorgt einerseits für eine kompakte Ausgestaltung des Elements und andererseits dafür, dass das Element unkompliziert und schnell an einem Strukturelement der Kabine befestigt oder gelöst werden kann und somit jederzeit abhängig vom zu haltenden Gegenstand austauschbar ist. So können Gegenstände, wie beispielsweise Jacken oder andere Kleidungsstücke, mittels des Elements an einem oder mehreren Strukturelementen der Kabine positioniert bzw. befestigt werden, ohne dabei den Komfort und/oder die Sicht eines Bedieners im Inneren der Kabine zu beeinträchtigen. Sofern Kabel, Leitungen oder dergleichen, die für die Integration eines zusätzlichen Displays/Terminals erforderlich sind, im Inneren der Kabine vorhanden sind, sorgt das Element dafür, dass diese im Inneren der Kabine entlang des oder der Strukturelemente bzw. Verkleidungselemente geführt werden können. Kabel, Leitungen oder dergleichen hängen somit nicht länger schlicht vom Display/Terminal herab, wobei sie die Sicht des Bedieners beeinträchtigen. Vielmehr können Kabel, Leitungen oder dergleichen ausgehend vom Display/Terminal strukturiert so im Inneren der Kabine geführt werden, dass sie nicht stören. Die erfindungsgemäße kompakte Ausgestaltung des Elements sorgt weiterhin dafür, dass sich das Element im befestigten Zustand an dem Strukturelement der Kabine homogen in das Erscheinungsbild im Inneren der Kabine einfügt und nicht als störender Fremdkörper wahrgenommen wird.

Gemäß einer vorteilhaften Weiterbildung der Erfindung ist vorgesehen, dass zum lösbaren Befestigen des Elements eine Ausrichtung des mittels des Befestigungsabschnitts in die Durchdringung eingreifenden Elements relativ zum Strukturelement veränderbar ist.

Vorzugsweise ist vorgesehen, dass zum lösbaren Befestigen des Elements die Ausrichtung des mittels des Befestigungsabschnitts in die Durchdringung eingreifenden Elements relativ zum Strukturelement um einen Winkel von 90° veränderbar ist.

Nach dem Einstecken des Elements in die komplementäre Durchdringung am Strukturelement kann somit durch eine schlichte Veränderung der Ausrichtung, insbesondere ein Drehen, des Elements besonders einfach und schnell der für die Befestigung erforderliche Hintergriff erzielt werden. Ein Befestigen und Lösen des Elements ist für den Bediener somit ein unkomplizierter Vorgang, der wenig Zeit kostet.

Gemäß einer vorteilhaften Weiterbildung der Erfindung ist vorgesehen, dass das Element eine Anlagefläche umfasst, die im befestigten Zustand des Elements an einer dem Inneren der Kabine zugewandten Oberfläche des Strukturelements anliegt, wobei die Anlagefläche von einer Stirnseite des Halterungsabschnitts, von welcher sich der Befestigungsabschnitt aus erstreckt, ausgebildet ist.

Gemäß einer vorteilhaften Weiterbildung der Erfindung ist vorgesehen, dass die Arretierstruktur an einem von dem Halterungsabschnitt wegweisenden Ende des Befestigungsabschnitts ausgebildet ist.

Durch die Anlagefläche, die im befestigten Zustand des Elements an einer dem Inneren der Kabine zugewandten Oberfläche des Strukturelements anliegt, und die Arretierstruktur am Befestigungsabschnitt, die insbesondere am Ende des Befestigungsabschnitts ausgebildet ist, wird eine formschlüssige Befestigung des Elements an dem Strukturelement erzielt. Das Strukturelement ist demnach zwischen der Anlagefläche und der Arretierstruktur des Elements aufgenommen, wodurch, zusätzlich zur unterbundenen Bewegungsmöglichkeit relativ zum Strukturelement quer zur Einsteck- bzw. Auszugrichtung des Elements aufgrund der Anordnung des Befestigungsabschnitts in der komplementären Durchdringung, eine Bewegungsmöglichkeit des Elements relativ zum Strukturelement in Einsteck- bzw. Auszugrichtung des Elements unterbunden wird.

Gemäß einer vorteilhaften Weiterbildung der Erfindung ist vorgesehen, dass die Arretierstruktur dazu vorgesehen und eingerichtet ist, mit einer Führungsstruktur des Strukturelements, welche an einer dem Inneren der Kabine abgewandten Oberfläche des Strukturelements, die Durchdringung bereichsweise umfänglich umgebend, ausgebildet ist, zusammenzuwirken.

Vorzugsweise ist vorgesehen, dass die Arretierstruktur dazu vorgesehen und eingerichtet ist, mit einer als zumindest ein rampenförmiges Führungselement mit einem endseitigen Anschlag ausgebildeten Führungsstruktur zusammenzuwirken.

Die Führungsstruktur des Strukturelements stellt sicher, dass bei einer Veränderung der Ausrichtung, insbesondere eines Drehens, des Elements zum Befestigen des Elements an dem Strukturelement die Arretierstruktur zur Bildung des Hintergriffs zuverlässig geführt wird und die Ausrichtung des Elements nicht mehr als für die Befestigung notwendig verändert wird. Weiterhin wird durch die Führungsstruktur, insbesondere dann, wenn sie als zumindest ein rampenförmigen des Führungselement ausgebildet ist, im befestigten Zustand des Elements zusätzlich zum Formschluss auch ein Kraftschluss realisiert werden. Die Befestigung des Elements mittels eines form- und kraftschlüssigen Hintergriffs sorgt dafür, dass sich das Element im befestigten Zustand nicht unerwünscht lösen kann, beispielsweise aufgrund von während des Betriebs der landwirtschaftlichen Arbeitsmaschine wirkenden Vibrationen, ausgelöst durch Arbeitsaggregate der landwirtschaftlichen Arbeitsmaschine, und/oder während des Betriebs auftretenden Erschütterungen.

Gemäß einer vorteilhaften Weiterbildung der Erfindung ist vorgesehen, dass der Befestigungsabschnitt zylindrisch, vorzugsweise hohlzylindrisch, ausgebildet ist, wobei die Arretierstruktur auf einer Umfangsfläche des Befestigungsabschnitts angeordnet ist.

Die zylindrische Ausgestaltung des Befestigungsabschnitt erlaubt eine besonders einfache Positionierung des Befestigungsabschnitt in der komplementären Durchdringung des Strukturelements. Durch die zylindrische Ausgestaltung des Befestigungsabschnitt und die daraus folgende zylindrische Ausgestaltung der Durchdringung wird es weiterhin besonders einfach möglich, die Ausrichtung des Elements relativ zum Strukturelement zu verändern, um das Element an dem Strukturelement zu befestigen, da die Umfangsfläche des Befestigungsabschnitts an der die Durchdringung definierenden Wandung bei einer Änderung der Ausrichtung entlanggleiten kann.

Gemäß einer vorteilhaften Weiterbildung der Erfindung ist vorgesehen, dass die Arretierstruktur zwei Vorsprünge umfasst, wobei die Vorsprünge auf der Umfangsfläche des Befestigungsabschnitts in Umfangsrichtung voneinander beabstandet ausgebildet sind.

Gemäß einer vorteilhaften Weiterbildung der Erfindung ist vorgesehen, dass die Vorsprünge einander in Umfangsrichtung diametral gegenüberliegen.

Durch die Ausgestaltung der Arretierstruktur in Gestalt zweier Vorsprünge, die auf der Umfangsfläche in Umfangsrichtung voneinander, vorzugsweise diametral gegenüberliegend, beanstandet ausgebildet sind, kann der für die Befestigung des Elements an dem Strukturelement erforderliche Hintergriff besonders einfach ausgebildet werden. Durch die komplementäre Ausgestaltung der Durchdringung weist auch diese entsprechend zu den Vorsprüngen ausgebildeten Nute auf, die bei einem Einsteck- bzw. Ausziehvorgang des Elements eine Führung der Vorsprünge erlaubt. Sofern das Element vollständig mittels des Befestigungsabschnitt in die Durchdringung des Strukturelements eingesetzt ist, stehen die Vorsprünge rückseitig über das Strukturelement hinaus. Wird nun die Ausrichtung des Elements zwecks Befestigung des Elements verändert, liegen die Vorsprünge an einer dem Inneren der Kabine abgewandten Oberfläche des Strukturelements an, wodurch der Hintergriff ausgebildet wird.

Vorzugsweise ist vorgesehen, dass die Vorsprünge dazu vorgesehen und eingerichtet sind, mit zwei rampenförmigen Führungselementen, welche voneinander in Umfangsrichtung beabstandet, vorzugsweise einander diametral gegenüberliegend, an der dem Inneren der Kabine abgewandten Oberfläche des Strukturelements ausgebildet sind, zusammenzuwirken.

Die Vorsprünge gleiten bei einer Veränderung der Ausrichtung des Elements zur Befestigung desselben entlang der rampenförmigen Führungselement. Hierbei wird eine aufgrund der rampenförmigen Ausgestaltung während des Gleitvorgangs kontinuierlich zunehmende Reibungskraft zwischen den Vorsprüngen und den Führungselementen erzeugt. Am Ende der Bewegung ist das Element mittels der Vorsprünge somit nicht nur formschlüssig an dem Strukturelement befestigt, sondern auch kraftschlüssig.

Gemäß einer vorteilhaften Weiterbildung der Erfindung ist vorgesehen, dass die Vorsprünge sich auf der Umfangsfläche des Befestigungsabschnitts in Umfangsrichtung unterschiedlich weit erstrecken.

Diese Ausgestaltung stellt sicher, dass das Element zum Befestigen an dem Strukturelement nur in einer ganz bestimmten Ausrichtung in die Durchdringung eingeführt werden kann. Nach Änderung der Ausrichtung, also der Durchführung der Drehbewegung, nimmt das Element im befestigten Zustand somit stets die für die Anbringung bzw. Positionierung des oder der Gegenstände richtige Ausrichtung relativ zum Strukturelement ein.

Gemäß einer vorteilhaften Weiterbildung der Erfindung ist vorgesehen, dass der Halterungsabschnitt in Gestalt einer Klemme oder eines Hakens ausgebildet ist.

Hierdurch wird es möglich verschiedenste Gegenstände im Inneren der Kabine zu Haltern. Je nach Gegenstand kann somit ein Element mit einem geeigneten Befestigungsabschnitt ausgewählt werden und am Strukturelement der Kabine befestigt werden. Diese Ausgestaltung schafft somit eine hohe Flexibilität bei der Halterung bzw. Anbringung von Gegenständen im Inneren der Kabine.

Die erfindungsgemäße Aufgabe wird ferner durch eine Kabine für eine landwirtschaftlichen Arbeitsmaschine, insbesondere einen Traktor, mit zumindest einem Element zur Halterung von Gegenständen im Inneren der Kabine gemäß dem unabhängigen Patentanspruch 13 gelöst.

Weiterhin wird die erfindungsgemäße Aufgabe durch eine landwirtschaftliche Arbeitsmaschine, insbesondere einen Traktor, mit einer Kabine gemäß dem unabhängigen Patentanspruch 14 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen landwirtschaftlichen Arbeitsmaschine in Gestalt eines Traktors;
- FIG. 2: eine schematische und exemplarische Darstellung einer ersten Ausführungsform eines erfindungsgemäßen Elements zur Halterung von Gegenständen in einem an einem Strukturelement einer Kabine der landwirtschaftlichen Arbeitsmaschine aus FIG. 1 befestigten Zustand;
- FIG. 3: eine schematische und exemplarische Darstellung einer zweiten Ausführungsform eines erfindungsgemäßen Elements zur Halterung von Gegenständen in einem an einem Strukturelement einer Kabine der landwirtschaftlichen Arbeitsmaschine aus FIG. 1 befestigten Zustand; und
- FIG. 4: eine schematische und exemplarische Darstellung des erfindungsgemäßen Elements zur Halterung von Gegenständen gemäß der in FIG. 2 oder FIG. 3 dargestellten Ausführungsform mit Blickrichtung auf eine dem Inneren der Kabine abgewandten Oberfläche des Strukturelements.

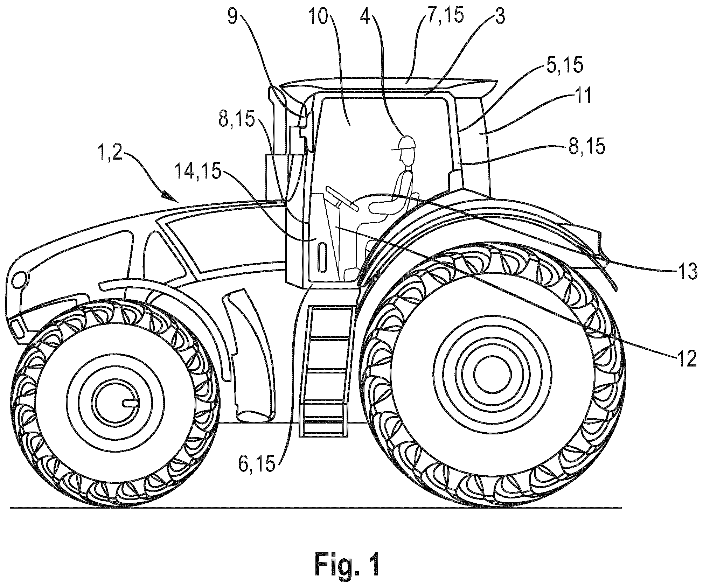

FIG. 1 zeigt eine schematische und exemplarische Darstellung einer erfindungsgemä-ßen landwirtschaftlichen Arbeitsmaschine 1 in Gestalt eines Traktors 2, dessen grundsätzlicher Aufbau bekannt ist. Die landwirtschaftliche Arbeitsmaschine 1 umfasst demnach eine Mehrzahl an - in den FIGs. nicht dargestellten - Arbeitsaggregaten, die dem Antrieb bzw. Betrieb der landwirtschaftlichen Arbeitsmaschine 1 und/oder dem Antrieb bzw. Betrieb eines - in den FIGs. nicht dargestellten - mit der landwirtschaftlichen Arbeitsmaschine 1 koppelbaren Anbaugerätes dienen.

Zur Steuerung sowie allgemeinen Überwachung des Betriebs der landwirtschaftlichen Arbeitsmaschine 1 umfasst die landwirtschaftliche Arbeitsmaschine 1 eine erfindungsgemäße Kabine 3, in der sich ein Bediener 4 während des Betriebs der landwirtschaftlichen Arbeitsmaschine 1 zur Steuerung derselben befindet. Ferner umfasst die Kabine 3 einen Rahmen 5, der, wie in FIG. 1 dargestellt, einen Kabinenboden 6, ein Kabinendach 7 sowie den Kabinenboden 6 und das Kabinendach 7 miteinander verbindende Kabinenstreben 8 umfasst. Die Kabinenstreben 8 umfassen dabei die im Wesentlichen vertikal verlaufenden Kabinensäulen, auch A- und B-Säulen genannt, sowie etwaige sich zwischen den Kabinensäulen erstreckende Querstreben. Zwischen den die A-Säulen bildenden Kabinensäulen, dem Kabinenboden 6 und dem Kabinendach 7 erstreckt sich eine Frontscheibe 9, die einen vorderen räumlichen Abschluss der Kabine 3 bildet. Neben der Frontscheibe 9 umfasst die Kabine 3 an ihren Seiten jeweils Seitenscheiben 10, welche Bestandteil einer Zugangstür zur Kabine 3 sein können. Die Seitenscheiben 10 erstrecken sich zwischen einer jeweiligen eine A-Säule bildenden Kabinensäule und einer jeweiligen eine B-Säule bildenden Kabinensäule. Weiterhin umfasst die Kabine 3 eine Heckscheibe 11, die sich zwischen den die B-Säulen bildenden Kabinensäulen, dem Kabinendach 7 und einer hinteren Querstrebe erstreckt und die schwenkbar an dem Rahmen 5, beispielsweise am Kabinendach 7 oder den die B-Säulen bildenden Kabinensäulen, gelagert ist.

Im Inneren der Kabine 3 findet sich neben einem Fahrersitz, auf dem der Bediener 4 der landwirtschaftlichen Arbeitsmaschine 1 zur Steuerung derselben Platz nehmen kann, eine Lenksäule 12 mit einem Lenkrad 13 zum Lenken der landwirtschaftlichen Arbeitsmaschine 1 im Betrieb. Der Rahmen 5 bzw. die den Rahmen 5 bildenden Rahmenelemente, Kabinenboden 6, Kabinendach 7 sowie Kabinenstreben 8, sind zumindest bereichsweise von Verkleidungselementen 14 umgeben bzw. verkleidet. Mit anderen Worten, an dem Rahmen 5 im Inneren der Kabine 3 sind zumindest bereichsweise Verkleidungselemente 14 angeordnet.

Die Verkleidungselemente 14 dienen dazu, dem Bediener 4, der sich im Betrieb der landwirtschaftlichen Arbeitsmaschine 1 im Inneren der Kabine 3 befindet, einen ansprechenden optischen Eindruck der Kabine 3 im Inneren zu vermitteln. Gleichzeitig dienen die Verkleidungselemente 14 dazu, Kabel, Leitungen oder dergleichen, die beispielsweise für die Realisierung der Lenkfunktion oder zur Übertragung von Daten zwischen verschiedenen elektronischen Geräten innerhalb und außerhalb der Kabine 3 erforderlich sind, im Inneren der Kabine 3 zu führen, ohne dass diese von dem Bediener 4 wahrgenommen werden. Üblicherweise sind die Verkleidungselemente 14 aus einem Kunststoff, vorzugsweise einen Polyurethan-Kunststoff, ausgebildet. Die Verkleidungselemente 14 können allerdings auch aus anderen Materialien, beispielsweise einem Metall, wie Aluminium, Edelstahl oder dergleichen, und/oder einem Holz, ausgebildet sein. Genauso gut ist es vorstellbar, dass die Verkleidungselemente 14 aus einem Materialmix ausgebildet sind, beispielsweise in der Gestalt, dass das Verkleidungselement 14 überwiegend aus Kunststoff gefertigt ist, jedoch Applikationen bzw. Einlagen umfasst, die aus einem anderen Material, beispielsweise einem Metall und/oder Holz, ausgebildet sind. Die Verkleidungselemente 14 oder Bereiche der Verkleidungselemente 14 können ferner mit Überzügen, beispielsweise durch einen Stoff und/oder Leder ausgebildet, versehen sein, die für eine ansprechende optische und/oder haptische Wahrnehmung im Inneren der Kabine 3 sorgen.

Der Rahmen 5 bzw. die den Rahmen 5 bildenden Rahmenelemente, also Kabinenboden 6, Kabinendach 7 sowie Kabinenstreben 8, und auch die Verkleidungselemente 14 stellen Strukturelemente 15 der Kabine 3 dar.

Wie eingangs beschrieben, besteht oftmals der Bedarf Gegenstände im Inneren der Kabine 3 zu haltern bzw. zu positionieren. Solche - in den FIGs. nicht dargestellte - Gegenstände können beispielsweise Kabel, Leitungen oder dergleichen, die im Inneren der Kabine 3 geführt werden müssen, und/oder Bekleidungsstücke, wie eine Jacke, sein, die im Inneren der Kabine 3 aufgehängt werden sollen. Damit eine solche Halterung bzw. Positionierung von Gegenständen im Inneren der Kabine 3 möglich wird, ist zumindest ein Element 16 zur Halterung von Gegenständen vorgesehen.

Das Element 16 umfasst einen Halterungsabschnitt 17 zur Halterung von Gegenständen und einen an den Halterungsabschnitt 17 angrenzenden Befestigungsabschnitt 18 zum Befestigen des Elements 16 an einem Strukturelement 15. Mit anderen Worten, das Element 16 wird aus dem Halterungsabschnitt 17 und dem an den Halterungsabschnitt 17 angrenzenden Befestigungsabschnitt 18 ausgebildet.

Im befestigten Zustand des Elements 16 an einem Strukturelement 15 der Kabine 3 greift der Befestigungsabschnitt 18 in eine zum Befestigungsabschnitt 18 komplementär ausgeführte Durchdringung 19 in dem Strukturelement 15 ein. Damit das Element 16 lösbar an dem Strukturelement 15 befestigt werden kann, umfasst der Befestigungsabschnitt 18 eine Arretierstruktur 20. Die Arretierstruktur 20 ist dabei derart an dem Befestigungsabschnitt 18 angeordnet, dass sie das Strukturelement 15 im befestigten Zustand des Elements 16 hintergreift.

Die Arretierstruktur 20 ist dabei insbesondere derart an dem Befestigungsabschnitt 18 angeordnet, dass mittels einer Veränderung der Ausrichtung des Elements 16, nachdem dieses mit dem Befestigungsabschnitt 18 in die Durchdringung 19 des Strukturelements 15 eingesteckt wurde, also mittels des Befestigungsabschnitt 18 in die Durchdringung 19 eingreift, der Hintergriff zur Befestigung des Elements 16 an dem Strukturelement 15 ausgebildet wird. Die Änderung der Ausrichtung des Elements 16 wird dabei durch ein Drehen des Elements 16 um eine mittig durch die Durchdringung 19 verlaufende Rotationsachse A erzielt. Bevorzugt ist die Arretierstruktur 20 derart an dem Befestigungsabschnitt 18 ausgebildet bzw. angeordnet, dass bei einer Änderung der Ausrichtung des Elements 16 um einen Winkel von 90° der Hintergriff zum Befestigen des Elements 16 an dem Strukturelement 15 ausgebildet wird.

Damit das Element 16 nicht unbegrenzt weit in die Durchdringung 19 eingeführt bzw. eingesteckt werden kann, umfasst das Element 16 eine Anlagefläche 21. Die Anlagefläche 21 liegt im befestigten Zustand des Elements 16 an einer dem Inneren der Kabine 3 zugewandten Oberfläche 22 des Strukturelements 15 an. Die Anlagefläche 21 wird dabei von einer Stirnseite 23 des Halterungsabschnitt 17 gebildet. Der Befestigungsabschnitt 18 grenzt unmittelbar an die Stirnfläche 23 an und erstreckt sich somit von der Stirnfläche 23 des Halterungsabschnitts 17 ausgehend. Die Arretierstruktur 20 ist vorzugsweise derart an dem Befestigungsabschnitt 18 angeordnet bzw. ausgebildet, dass diese, sofern der Befestigungsabschnitt 18 vollständig in die Durchdringung 19 eingeführt ist bzw. vollständig in die Durchdringung 19 eingreift, die Anlagefläche 21 somit an der Oberfläche 22 des Strukturelements 15 anliegt, rückwärtig aus der Durchdringung 19 herausragt.

Damit die Befestigung des Elements 16 an dem Strukturelement 15 zuverlässig erfolgt, wirkt die Arretierstruktur 20 des Elements 16 mit einer Führungsstruktur 24, die an dem Strukturelement 15 ausgebildet ist, zusammen. Die Führungsstruktur 24 ist dabei an einer dem Inneren der Kabine 3 abgewandten Oberfläche 25 des Strukturelements 15 angeordnet bzw. ausgebildet, wobei sie die Durchdringung 19 bereichsweise umfänglich umgibt. Mit anderen Worten, die Führungsstruktur 24 ist an der Oberfläche 25 des Strukturelements 15 ausgebildet bzw. angeordnet, an welcher die Arretierstruktur 20 zum Ausbilden des Hintergriffs bereichsweise anliegt. Über die Führungsstruktur 24 wird die Arretierstruktur 20 des Elements 16 während der Bewegung, also des Drehens, derart geführt, dass die Arretierstruktur 20 nach Abschluss der Bewegung, also dann, wenn das Element 16 an dem Strukturelement 15 befestigt ist, das Strukturelement 15 hintergreift.

Ein Befestigungsvorgang des Elements 16 an einem Strukturelement 15 der Kabine 3 erfolgt demnach gemäß dem folgenden Vorgehen. Das Element 16 wird mit seinem Befestigungsabschnitt 18 in die komplementär ausgeführte Durchdringung 19 in dem Strukturelement 15 eingeführt. Nachdem der Befestigungsabschnitt 18 vollständig in die Durchdringung 19 eingreift, wird das Element 16 gedreht, sodass die Ausrichtung des Elements 16 relativ zu Strukturelement 15 geändert wird. Während der Drehbewegung des Elements 16 wird die Arretierstruktur 20 an der Führungsstruktur 24 des Strukturelements 15 geführt, wodurch sich der Hintergriff ausbildet. Soll das Element 16 wieder von dem Strukturelement 15 gelöst werden, wird das Element 16 entsprechend in umgekehrter Drehrichtung gedreht, sodass der Hintergriff aufgelöst wird und das Element 16 bzw. der Befestigungsabschnitt 18 des Elements 16 wieder aus der Durchdringung 19 des Strukturelements 15 gezogen werden kann.

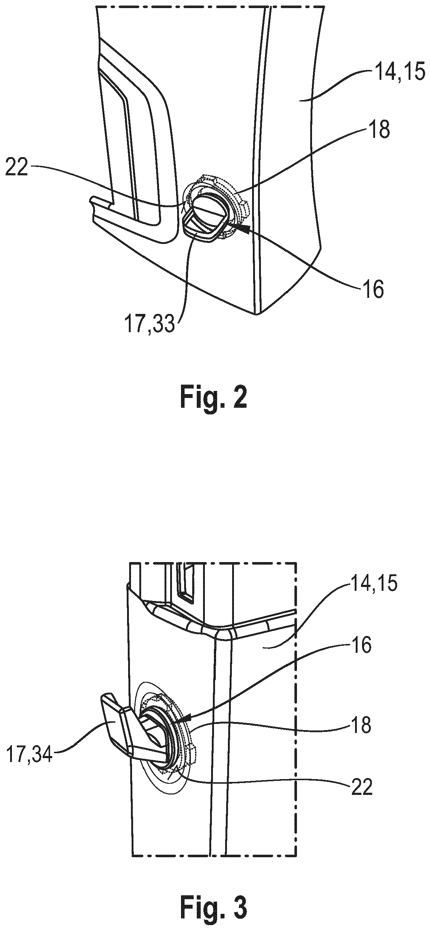

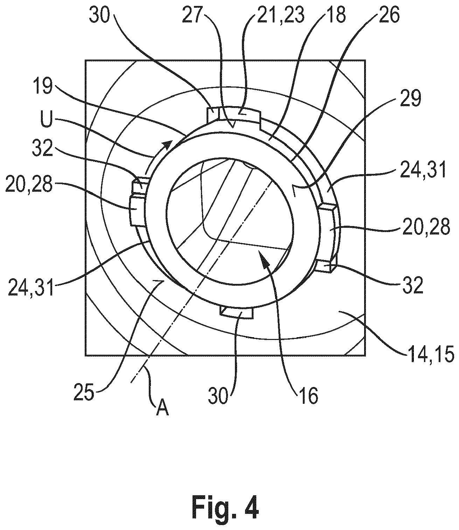

Bezugnehmend auf die FIGs. 2 bis 4 werden nachfolgend Ausführungsformen des Elements 16 zur Halterung von Gegenständen im Inneren der Kabine 3 im Detail beschrieben.

Bei den in den FIGs. 2 bis 4 gezeigten und insofern bevorzugten Ausführungsformen wird das Strukturelement 15 von einem Verkleidungselement 14 der Kabine 3, insbesondere von einem Verkleidungselement 14, welches eine als Kabinensäule ausgebildete Kabinenstrebe 8 verkleidet, gebildet. Das Element 16 ist jedoch auch grundsätzlich geeignet an anderen Strukturelementen 15 der Kabine 3 angeordnet bzw. befestigt zu werden.

Der Befestigungsabschnitt 18 des Elements 16 ist zylindrisch, insbesondere hohlzylindrisch, ausgebildet. Die Arretierstruktur 20 ist an einem von dem Halterungsabschnitt 17 wegweisenden Ende 26 des Befestigungsabschnitts 18 auf einer Umfangsfläche 27 des Befestigungsabschnitt 18 angeordnet bzw. ausgebildet. Die Arretierstruktur 20 wird insbesondere von zwei Vorsprüngen 28 gebildet. Die Vorsprünge 28 sind auf der Umfangsfläche 27 des Befestigungsabschnitt 18 in Umfangsrichtung U voneinander beanstandet ausgebildet, vorzugsweise so, dass sie sich in Umfangsrichtung U diametral gegenüberliegen. Ferner sind die Vorsprünge 28 derart ausgebildet, dass sie unmittelbar an einer das Ende 26 definierenden Stirnfläche 29 des Befestigungsabschnitts 18 angrenzend auf der Umfangsfläche 27 des Befestigungsabschnitt 18 ausgebildet bzw. angeordnet sind. Die Vorsprünge 28 erstrecken sich ausgehend von dem Ende 26 bzw. der Stirnfläche 29 bereichsweise in Richtung des Halterungsabschnitts 17 bzw. der Stirnfläche 25 auf der Umfangsfläche 27, vorzugsweise über die Hälfte der Länge des Befestigungsabschnitts 18, die durch den Abstand zwischen den Stirnflächen 25, 29 definiert wird, oder weniger. Die Erstreckung der Vorsprünge 28 in Umfangsrichtung U auf der Umfangsfläche 27 ist dabei unterschiedlich weit.

Da die Durchdringung 19 im Strukturelement 15 komplementär zum Befestigungsabschnitt 18 bzw. der äußeren Formgebung des Befestigungsabschnitt 18 ausgebildet ist, umfasst die Durchdringung 19 entsprechend zwei Nute 30, die sich in Umfangsrichtung U diametral gegenüberliegen und in Umfangsrichtung U unterschiedlich weit erstrecken. Diese Ausgestaltung stellt sicher, dass das Element 16 zum Befestigen an dem Strukturelement 15 nur in einer ganz bestimmten Ausrichtung in die Durchdringung 19 eingeführt werden kann. Nach Ausführung der Bewegung, insbesondere der Drehbewegung, nimmt das Element 16 im befestigten Zustand somit stets die richtige Ausrichtung relativ zum Strukturelement 15 ein.

Die Führungsstruktur 21, welche dafür sorgt, dass sich ein form- und kraftschlüssiger Hintergriff von Element 16 und Strukturelement 15 ausbildet, nachdem der Befestigungsabschnitt 18 vollständig, also bis die Anlagefläche 21 an der Oberfläche 22 anliegt, in die Durchdringung 19 eingeführt ist, ist dabei in Gestalt zweier rampenförmiger Führungselement 31 ausgebildet. Die Führungselement 31 sind einander diametral gegenüber liegend an der dem Inneren der Kabine 3 abgewandten Oberfläche 25 des Strukturelements 15, die Durchdringung 19 bereichsweise umfänglich umgebend, ausgebildet. Endseitig eines jeden rampenförmigen Führungselements 31, und zwar am höherliegenden Ende des rampenförmigen Führungselements 31, ist ein Anschlag 32 ausgebildet bzw. vorgesehen, an dem jeweils ein Vorsprung 28 im befestigten Zustand des Elements 16 an dem Strukturelement 15 anliegt. Die Vorsprünge 28 am Befestigungsabschnitt 18 des Elements 16, die, sofern der Befestigungsabschnitt 18 vollständig in die Durchdringung 19 eingreift, die Anlagefläche 21 also an der Oberfläche 22 des Strukturelement 15 anliegt, aus der Durchdringung 19 herausragen, gleiten bei einer Drehbewegung des Elements 16 entlang der rampenförmigen Führungselement 31, bis sie mit dem jeweiligen Anschlag 32 des rampenförmigen Führungselements 31 in Anlage gelangen. Hierdurch wird, neben dem Formschluss, aufgrund der Rampenform der Führungselemente 31 zusätzlich ein Kraftschluss zur Befestigung des Elements 16 an dem Strukturelement 15 ausgebildet wird. Das Element 16 ist somit gegen ein ungewolltes Lösen von dem Strukturelement 15, beispielsweise aufgrund von Erschütterungen und/oder Vibrationen im Betrieb der landwirtschaftlichen Arbeitsmaschine 1, gesichert.

Damit verschiedenste Gegenstände von dem Element 16 im Inneren der Kabine 3 positioniert werden können, kann der Halterungsabschnitt 17 des Elements 16 unterschiedlich ausgebildet sein. Sofern beispielsweise Leitungen, Kabel oder dergleichen im Inneren der Kabine 3 positioniert werden sollen, ist der Halterungsabschnitt 17 des Elements 16, wie in FIG: 2 dargestellt, in Gestalt einer Klemme 33 ausgebildet. Soll hingegen ein Kleidungsstück im Inneren der Kabine 3 positioniert werden, so ist der Halterungsabschnitt 17 des Elements 16, wie in FIG. 3 dargestellt, in Gestalt eines Hakens 34 ausgebildet. Weitere Ausgestaltungen des Halterungsabschnitts 17 sind gleichermaßen vorstellbar.

Im Inneren der Kabine 3 kann lediglich eine Durchdringung 19 in einem Strukturelement 15 oder aber eine Vielzahl an Durchdringungen 19 in einem oder mehreren Strukturelementen 15 ausgebildet sein. Ein Bediener 4 der landwirtschaftlichen Arbeitsmaschine hat demnach die Möglichkeit ein Element 16 an einer bestimmten Stelle oder aber an verschiedenen Stellen im Inneren der Kabine 3 zu befestigen, um dort Gegenstände zu halten bzw. zu positionieren. Selbstverständlich können auch mehrere Elemente 16 vorgesehen sein, sodass gleichzeitig verschiedene Gegenstände im Inneren der Kabine 3 positioniert werden können. Die Durchdringung 19 kann, sofern kein Element 16 in diese eingesetzt ist, von einem - in den FIGs. nicht dargestellten - Verschluss verschlossen werden.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliche Arbeitsmaschine | 27 | Umfangsfläche |
| | | 28 | Vorsprung |
| 2 | Traktor | 29 | Stirnfläche |
| 3 | Kabine | 30 | Nut |
| 4 | Bediener | 31 | Führungselement |
| 5 | Rahmen | 32 | Anschlag |
| 6 | Kabinenboden | 33 | Klemme |
| 7 | Kabinendach | 34 | Haken |
| 8 | Kabinenstreben | | |
| 9 | Frontscheibe | A | Rotationsachse |
| 10 | Seitenscheibe | U | Umfangsrichtung |
| 11 | Heckscheibe | | |
| 12 | Lenksäule | | |
| 13 | Lenkrad | | |
| 14 | Verkleidungselement | | |
| 15 | Strukturelement | | |
| 16 | Element zur Halterung von Gegenständen | | |
| 17 | Halterungsabschnitt | | |
| 18 | Befestigungsabschnitt | | |
| 19 | Durchdringung | | |
| 20 | Arretierstruktur | | |
| 21 | Anlagefläche | | |
| 22 | Oberfläche | | |
| 23 | Stirnseite | | |
| 24 | Führungsstruktur | | |
| 25 | Oberfläche | | |
| 26 | Ende | | |

## Patentansprüche

1. Element (16) zur Halterung von Gegenständen im Inneren einer Kabine (3) einer landwirtschaftlichen Arbeitsmaschine (1), insbesondere eines Traktors (2), wobei das Element (16) einen Halterungsabschnitt (17) zur Halterung von Gegenständen und einen an den Halterungsabschnitt (17) angrenzenden Befestigungsabschnitt (18) zum Befestigen des Elements (16) an einem Strukturelement (15), vorzugsweise einem Verkleidungselement (14), der Kabine (3) umfasst, **dadurch gekennzeichnet, dass** der Befestigungsabschnitt (18) dazu vorgesehen und eigerichtet ist, im befestigten Zustand des Elements (16) in eine zum Befestigungsabschnitt (18) komplementär ausgeführte Durchdringung (19) in dem Strukturelement (15) einzugreifen, wobei der Befestigungsabschnitt (18) eine Arretierstruktur (20) umfasst, mittels welcher das Element (16) lösbar an dem Strukturelement (15) befestigbar ist, wobei die Arretierstruktur (20) derart an dem Befestigungsabschnitt (18) angeordnet ist, dass sie das Strukturelement (15) im befestigten Zustand des Elements (16) hintergreift.

2. Element (16) nach Anspruch 1, **dadurch gekennzeichnet, dass** zum lösbaren Befestigen des Elements (16) eine Ausrichtung des mittels des Befestigungsabschnitts (18) in die Durchdringung (19) eingreifenden Elements (16) relativ zum Strukturelement (15), vorzugsweise um einen Winkel von 90°, veränderbar ist.

3. Element (16) nach Anspruch 1 oder 2, **dadurch gekennzeichnet, dass** das Element (16) eine Anlagefläche (21) umfasst, die im befestigten Zustand des Elements (16) an einer dem Inneren der Kabine (3) zugewandten Oberfläche (22) des Strukturelements (15) anliegt, wobei die Anlagefläche (21) von einer Stirnseite (23) des Halterungsabschnitts (17), von welcher sich der Befestigungsabschnitt (18) aus erstreckt, ausgebildet ist.

4. Element (16) nach einem der Ansprüche 1 bis 3, **dadurch gekennzeichnet, dass** die Arretierstruktur (20) an einem von dem Halterungsabschnitt (17) wegweisenden Ende (26) des Befestigungsabschnitts (18) ausgebildet ist.

5. Element (16) nach einem der Ansprüche 1 bis 4, **dadurch gekennzeichnet, dass** die Arretierstruktur (20) dazu vorgesehen und eingerichtet ist, mit einer Führungsstruktur (24) des Strukturelements (15), welche an einer dem Inneren der Kabine (3) abgewandten Oberfläche (25) des Strukturelements (15), die Durchdringung (19) bereichsweise umfänglich umgebend, ausgebildet ist, zusammenzuwirken.

6. Element (16) nach Anspruch 5, **dadurch gekennzeichnet, dass** die Arretierstruktur (20) dazu vorgesehen und eingerichtet ist, mit einer als zumindest ein rampenförmiges Führungselement (31) mit einem endseitigen Anschlag (32) ausgebildeten Führungsstruktur (24) zusammenzuwirken.

7. Element (16) nach einem der Ansprüche 1 bis 6, **dadurch gekennzeichnet, dass** der Befestigungsabschnitt (18) zylindrisch, vorzugsweise hohlzylindrisch, ausgebildet ist, wobei die Arretierstruktur (20) auf einer Umfangsfläche (27) des Befestigungsabschnitts (18) angeordnet ist.

8. Element (16) nach Anspruch 7, **dadurch gekennzeichnet, dass** die Arretierstruktur (20) zwei Vorsprünge (28) umfasst, wobei die Vorsprünge (28) auf der Umfangsfläche (27) des Befestigungsabschnitts (18) in Umfangsrichtung (U) voneinander beabstandet ausgebildet sind.

9. Element (16) nach Anspruch 8, **dadurch gekennzeichnet, dass** die Vorsprünge (28) einander in Umfangsrichtung (U) diametral gegenüberliegen.

10. Element (16) nach Anspruch 8 oder 9 in Kombination mit Anspruch 6, **dadurch gekennzeichnet, dass** die Vorsprünge (28) dazu vorgesehen und eingerichtet sind, mit zwei rampenförmigen Führungselementen (31), welche voneinander in Umfangsrichtung (U) beabstandet, vorzugsweise einander diametral gegenüberliegend, an der dem Inneren der Kabine (3) abgewandten Oberfläche (25) des Strukturelements (15) ausgebildet sind, zusammenzuwirken.

11. Element (16) nach einem der Ansprüche 8 bis 10, **dadurch gekennzeichnet, dass** die Vorsprünge (28) sich auf der Umfangsfläche (27) des Befestigungsabschnitts (18) in Umfangsrichtung (U) unterschiedlich weit erstrecken.

12. Element (16) nach einem der Ansprüche 1 bis 11, **dadurch gekennzeichnet, dass** der Halterungsabschnitt (17) in Gestalt einer Klemme (33) oder eines Hakens (34) ausgebildet ist.

13. Kabine (3) für eine landwirtschaftliche Arbeitsmaschine (1), insbesondere einen Traktor (2), mit zumindest einem Element (16) zur Halterung von Gegenständen im Inneren der Kabine (3), **dadurch gekennzeichnet, dass** das Element (16) nach einem der Ansprüche 1 bis 12 ausgebildet ist.

14. Landwirtschaftliche Arbeitsmaschine (1), insbesondere Traktor (2), mit einer Kabine (3), **dadurch gekennzeichnet, dass** die Kabine (3) nach Anspruch 13 ausgebildet ist.
